Europäisches Patentamt

European Patent Office

Office européen des brevets

(19)

(11) Veröffentlichungsnummer: **0 297 381**
**B1**

(12) # EUROPÄISCHE PATENTSCHRIFT

(45) Veröffentlichungstag der Patentschrift:
08.08.90

(51) Int. Cl.⁵: **F16J 15/34**

(21) Anmeldenummer: 88109797.6

(22) Anmeldetag: 20.06.88

(54) **Dichtungsanordnung für eine Welle.**

(30) Priorität: 03.07.87 DE 3722110

(43) Veröffentlichungstag der Anmeldung:
04.01.89 Patentblatt 89/1

(45) Bekanntmachung des Hinweises auf die Patenterteilung:
08.08.90 Patentblatt 90/32

(84) Benannte Vertragsstaaten:
AT BE CH DE FR GB IT LI NL

(56) Entgegenhaltungen:
EP-A- 0 013 678
DE-A- 1 928 675
US-A- 3 527 465

(73) Patentinhaber: Feodor Burgmann Dichtungswerke
GmbH & Co., Äussere Sauerlacher Strasse 6-8,
D-8190 Wolfratshausen 1(DE)

(72) Erfinder: Nosowicz, Josef, Dr., Dipl.-Ing.,
Richard-Wagner-Strasse 1, D-8192 Geretsried(DE)

(74) Vertreter: Empl, Karl et al, Patentanwälte Dipl.-Ing. K.
Empl Dipl.-Ing., Dipl.-Wirtsch.-Ing. K. Fehners
Schumannstrasse 2, D-8000 München 80(DE)

## Beschreibung

Bei der Abdichtung von aus Gehäusen herausgeführten drehenden Wellen gegen den Austritt von toxischen, explosiblen oder allgemein umweltbelastenden Medien ist es erforderlich, aus Sicherheitsgründen der im ungestörten Betrieb die Abdichtung übernehmenden Hauptdichtung eine Hilfsdichtung nachzuschalten, welche beim Ausfall der Hauptdichtung die Dichtfunktion übernimmt. Es ist bekannt, als derartige Hilfsdichtungen axiale Gleitringdichtungen vorzusehen. Hierbei tritt das Problem auf, daß auch bei intakter Hauptdichtung, wenn also die Funktion der Gleitringdichtung nicht gefordert ist, diese trotzdem aufgrund der Wellendrehung einem ständigen Verschleiß ausgesetzt ist, so daß sie gegebenenfalls bei Ausfall der Hauptdichtung bereits funktionsunfähig geworden ist. Eine derartige Hilfsdichtung bedarf daher der laufende Inspektion.

Das weitere Problem einer als Hilfsdichtung eingesetzten Gleitringdichtung besteht darin, daß zusätzliche Maßnahmen getroffen werden müssen, um einen Trockenlauf zu verhindern und um die erzeugte Reibungswärme abzuführen. Bekannte Gleitringdichtungen versuchen diese Schwierigkeit dadurch zu beseitigen, daß sie bei störungsfreiem Betrieb der Hauptdichtung außer Gleitflächenkontakt gehalten sind, wobei ein Mechanismus die Gleitflächen dann in Berührung bringt, wenn das abzudichtende Medium durch die Hauptdichtung durchgebrochen ist. Derartige Gleitringdichtungen sind aber technisch aufwendig, inspektionsbedürftig und können in der Regel nicht verhindern, daß eine gewisse Menge des abzudichtenden Mediums zwischen den Gleitflächen hindurchtritt, bevor diese in gegenseitige Berührung gebracht werden.

Bei magnetangetriebenen Pumpen ist die Hauptdichtung von einem Spalttopf (auch Spaltrohr oder einer Membrane) gebildet, auf deren einen Seite eine mit dem Pumpenrad verbundene ersten Magnetanordnung drehbar angeordnet ist, und auf der anderen Seite des Spaltrohres eine mit dieser magnetisch gekoppelte zweite Magnetanordnung angeordnet ist, welche auf einer motorisch angetriebenen, und am Pumpengehäuse gelagerten Welle sitzt. Obwohl diese Hauptdichtung an sich keinem reibenden Verschleiß ausgesetzt ist und bei bestimmten Medien eine praktisch unbegrenzte Lebensdauer aufweist, kann bei Betriebsstörungen (beispielsweise bei Drucksteigerungen oder eingebrachten Fremdkörpern) oder auch durch den Verschleiß durch abrasive Medien der Spalttopf beschädigt werden. Um einen Austritt des abzudichtenden Mediums zu verhindern, ist vorgeschlagen worden, eine Gleitringdichtung zwischen den beiden Wälzlagern der motorisch angetriebenen Welle anzuordnen und mit deren Ölsumpf zu schmieren, wobei zur Wärmeabfuhr ein Wärmetauscher vorgesehen ist. Durch diese Ausbildung läßt sich zwar ein Trockenlauf der Gleitringdichtung verhindern, jedoch verbleibt der Aufwand für die Wärmeabfuhr und die Beeinträchtigung der Wälzlager durch Abriebpartikel der Gleitringdichtung.

Als Hauptdichtungen zur Abdichtung eines gasförmigen Mediums sind gasgeschmierte Gleitringdichtungen bekannt. Eine typische Ausführungsform einer derartigen gasgeschmierten Gleitringdichtung ist in der EP-PS 0 013 678 erläutert. Man war aber bisher der Anschauung, daß derartige Gleitringdichtungen nur dann zuverlässig ihre Funktion erfüllen können, wenn sie auf derjenigen Umfangsseite der Gleitringe mit dem höheren Gasdruck beaufschlagt werden, an der die Schleppnuten austreten bzw. freiliegen und das Gas für die Ausbildung der Gaspolsters zwischen Gleitflächen aufnehmen. Weiterhin wurde es bisher als störend erachtet, wenn eine derartige gasgeschmierte Gleitringdichtung auch nur geringsten Mengen einer Flüssigkeit ausgesetzt war.

Aufgabe der Erfindung ist es, eine Dichtungsanordnung für eine Welle zu schaffen, mit der sich die Abdichtung gefährlicher Medien einfacher und mit geringem Wartungsaufwand durchführen läßt.

Diese Aufgabe wird, ausgehend von einer Dichtungsanordnung für eine Welle, mit einer bei Wellenstillstand und bei Wellendrehung im ungestörten Betrieb eine gefährliche Flüssigkeit am Austritt aus einem Gehäuse hindernden Hauptdichtung und einer dieser über einen von einem Gehäuseteil umschlossenen Raum nachgeschalteten und bei ihrem Ausfall die Dichtfunktion übernehmenden Hilfsdichtung, welche von einer bei Wellendrehung im ungestörten Betrieb berührungslos mitlaufenden Gleitringdichtung gebildet ist, dadurch gelöst, daß die Hilfsdichtung durch eine gasgeschmierte Gleitringdichtung gebildet ist, welche in bezug auf den Druck im Raum einen wesentlich über 1 liegenden K-Faktor aufweist, welche an ihrem Außenumfang mit dem Raum in Verbindung steht und welche an ihrem Innenumfang mit der freien Atmosphäre in Verbindung steht und zu diesem Innenumfang offene Schleppnuten aufweist, wobei im ungestörten Betrieb die Schleppnuten Luft aus der freien Atmosphäre zwischen die Gleitflächen einbringen und diese trennende Luftpolster minimaler Dicke bilden und wobei im Störungsfall die Gleitringdichtung, geschmiert von der in den Raum eingetretenen Flüssigkeit bzw. im Trockenlauf, die Dichtfunktion übernimmt.

Gemäß einer besonders vorteilhaften Ausgestaltung ist die Hauptdichtung durch den Spalttopf (Spaltrohr, Membrane) einer Pumpe mit Magnetantrieb gebildet, der einen das Pumpenrad und eine damit verbundene erste Magnetanordnung aufnehmenden, die abzudichtende gefährliche Flüssigkeit enthaltenden ersten Gehäuseteil gegen den diese Hauptdichtung mit der Hilfsdichtung verbindenden zweiten Gehäuseteil abdichtet, der eine mit der ersten Magnetanordnung durch den Spalttopf hindurch magnetisch gekoppelte, mit der Pumpen-Antriebswelle verbundene zweite Magnetanordnung enthält, wobei die Hilfsdichtung den Austritt der Pumpen-Antriebswelle aus dem zweiten Gehäuseteil zur freien Atmosphäre abdichtet und der Lageranordnung der Antriebswelle vorgeschaltet ist.

Weitere Merkmale und Vorteile der Erfindung ergeben sich aus den Unteransprüchen.

Ein Ausführungsbeispiel der Erfindung wird im folgenden anhand der Zeichnungen erläutert, in denen zeigt:

Fig. 1 einen Schnitt durch den die Hilfsdichtung enthaltenden zweiten Gehäuseteil;

Fig. 2 eine Draufsicht auf einen Teil des die Schleppnuten aufweisenden Gleitrings;

Fig. 3 einen Teilschnitt der Fig 1 zur Veranschaulichung einer ersten Modifikation und

Fig. 4 einen Teilschnitt der Fig. 1 zur Veranschaulichung einer zweiten Modifikation.

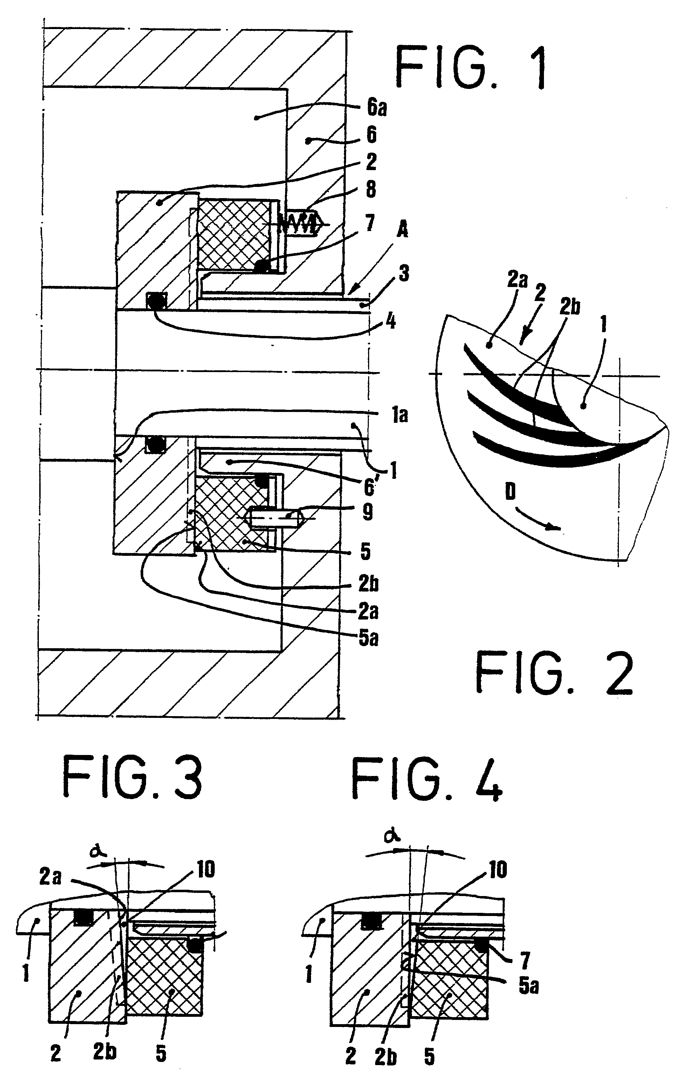

Die abzudichtende Welle 1 trägt an ihrem auf die Fig. 1 bezogenen linken Ende eine Magnetanordnung, die über einen Spalttopf hindurch magnetisch mit einer weiteren Magnetanordnung gekoppelt ist, die auf einer anderen, das Pumpenrad tragenden Welle befestigt ist. An ihrer bezogen auf die Fig. 1 rechten Seite ist die Welle 1 am Pumpengehäuse gelagert. Die vorerwähnten Bauteile können in konventioneller Weise ausgebildet sein und sind daher zeichnerisch nicht dargestellt.

Auf die Welle 1 ist ein erster Gleitring 2 mit seiner Bohrung aufgeschoben und in Axialrichtung einerseit durch einen Wellenbund 1a und andererseits durch eine Wellenhülse 3 gehalten, d.h. an seinem radial innersten Bereich befestigt. Der Gleitring 2 ist im Bereich seiner Bohrung durch eine als O-Ring ausgebildete Sekundärdichtung 4 gegen die Welle 1 abgedichtet.

Die Gleitfläche 2a des Gleitringes 2 weist vom radial inneren Umfang ausgehende, sichelförmige, entgegengesetzt zur Drehrichtung D gekrümmte Schleppnuten 2b minimaler Tiefe auf. An der Gleitfläche 2a liegt ein zweiter Gleitring 5 an, der mit seiner Bohrung auf einem nach innen weisenden Kragen eines zweiten Gehäuseteils 6 in Axialrichtung verschiebbar gelagert ist, das den ersten und zweiten Gleitring umgibt und das von einem (nicht veranschaulichten) ersten Gehäusteil (Pumpeninnenraum) durch den vorerwähnten Spalttopf getrennt ist. Eine als O-Ring ausgebildete Sekundärdichtung 7 dichtet den zweiten Gleitring 5 im Bereich des rückwärtigen Endes seiner Bohrung gegen den Kragen 6a. Eine Federanordnung 8 erteilt dem zweiten Gleitring 5 eine axiale Vorspannung in Richtung zum ersten Gleitring 2. Ein Stift 9 hindert den zweiten Gleitring an einer Drehung.

Im ungestörten Betrieb wird die von der Pumpe geförderte, abzudichtende Flüssigkeit vom Spalttopf von der durch den ersten Gleitring 2 und den zweiten Gleitring 5 gebildeten Hilfsdichtung ferngehalten. Diese schleppt über die Schleppnuten 2b beim Umlauf der Welle 1 Luft von der freien Atmosphäre A zwischen dei Gleitflächen (Dichtflächen) 2a, 5a, wobei ein Luftpolster minimaler Dicke gebildet wird, das die beiden Gleitflächen außer Berührung hält. Die Hilfsdichtung fördert Luft auch in den vom zweiten Gehäuseteil 6 umschlossenen Raum 6a, so daß dieser einen Überdruck bezüglich der freien Atmosphäre A erhält. Bricht im Störungsfall die abzudichtende Flüssigkeit in den Raum 6a ein, so wird zuerst die darin befindliche Luft stärker komprimiert und die Hilfsdichtung schließt sich. Dieser Effekt ist dadurch gesichert, daß in Bezug auf diesen Störungsfall die Gleitringdichtung mit einem wesentlich über 1 liegendem k-Faktor ausgebildet ist, insbesondere durch die auf einem geringen Durchmesser angeordneten Sekundärdichtung 7. In der Folge arbeitet dann die Hilfsdichtung als übliche flüssigkeitsgeschmierte Gleitringdichtung, wobei die Schleppnuten 2b noch einen Rückpumpeffekt bewirken.

Die Schließsicherheit im Störungsfall wird durch die in den Fig. 3 und 4 veranschaulichte modifizierte Ausbildung weiter verbessert. Im Falle der Fig. 3 ist die Gleitfläche des ersten Gleitringes 2 und im Falle der Fig. 4 die Gleitfläche 5a des zweiten Gleitringes 5 nicht als plane Fläche ausgebildet, sondern weist eine minimale Konizität auf (Winkel $\alpha$), wobei sich aber in jedem Fall der Spalt mit zunehmender Annäherung an die Welle 1 erweitert und einen Maximalwert von 10 $\mu$m annimmt. Durch die konstruktive Gestaltung (Ausbildung und Lagerung der Gleitringe sowie Lage von deren Sekundärdichtungen) ist sichergestellt, daß dieser Spalt 10 im Störungsfall (Druckanstieg im Raum 6a) zumindestens aufrechterhalten bleibt bzw. sich vorteilhafterweise noch vergrößert.

## Patentansprüche

1. Dichtungsanordnung für eine Welle (1), mit einer bei Wellenstillstand und bei Wellendrehung im ungestörten Betrieb eine gefährliche Flüssigkeit am Austritt aus einem Gehäuse hindernden Hauptdichtung und einer dieser über einen von einem Gehäuseteil (6) umschlossenen Raum (6a) nachgeschalteten und bei ihrem Ausfall die Dichtfunktion übernehmenden Hilfsdichtung, welche von einer bei Wellendrehung im ungestörten Betrieb berührungslos mitlaufenden Gleitringdichtung gebildet ist, dadurch gekennzeichnet, daß die Hilfsdichtung durch eine gasgeschmierte Gleitringdichtung (2, 5) gebildet ist, welche in bezug auf den Druck im Raum (6a) einen wesentlich über 1 liegenden K-Faktor aufweist, welche an ihrem Aussenumfang mit dem Raum (6a) in Verbindung steht und welche an ihrem Innenumfang mit der freien Atmosphäre (A) in Verbindung steht und zu diesem Innenumfang offene Schleppnuten (2b) aufweist, wobei im ungestörten Betrieb die Schleppnuten (2b) Luft aus der freien Atmosphäre zwischen die Gleitflächen (2a, 5a) einbringen und diese trennende Luftpolster minimaler Dicke bilden und wobei im Störungsfall die Gleitringdichtung (2, 5), geschmiert von der in den Raum (6a) eingetretenen Flüssigkeit bzw. im Trockenlauf, die Dichtfunktion übernimmt.

2. Dichtungsanordnung nach Anspruch 1, dadurch gekennzeichnet, daß die Hauptdichtung durch den Spalttopf (Spaltrohr, Membrane) einer Pumpe mit Magnetantrieb gebildet ist, der einen das Pumpenrad und eine damit verbundene erste Magnetanordnung aufnehmenden, die abzudichtende gefährliche Flüssigkeit enthaltenden ersten Gehäuseteil gegen den diese Hauptdichtung mit der Hilfsdichtung (2, 5) verbindenden zweiten Gehäuseteil (6) abdichtet, der eine mit der ersten Magnetanordnung durch den Spalttopf hindurch magnetisch gekoppelte, mit der Pumpen-Antriebswelle verbundene zweite Magnetanordnung enthält und daß die Hilfsdichtung (2, 5) den Austritt der Pumpen-Antriebswelle (1) aus dem zweiten Gehäuseteil (6) zur freien Atmosphäre (A) abdichtet und der Lageranordnung der Antriebswelle (1) vorgeschaltet ist.

3. Dichtungsanordnung nach Anspruch 1 oder 2, dadurch gekennzeichnet, daß die Dichtfläche (2a, 5a) der Gleitringe (2, 5) der Hilfsdichtung einen Spalt (10) bilden, dessen Weite sich, ausgehend vom Wert Null benachbart zum Aussenumfang der Dichtflächen, mit zunehmender Annäherung an den Innenumfang vergrößert.

4. Dichtungsanordnung nach Anspruch 3, dadurch gekennzeichnet, daß der Spalt (10) eine größte Weite von 10 µm aufweist.

5. Dichtungsanordnung nach Anspruch 3 oder 4, dadurch gekennzeichnet, daß die Gleitringe (2, 5) der Hilfsdichtung eine solche Formgebung und/oder Lage ihrer Sekundärdichtung und/oder Ort und Art ihrer Lagerung an den sie tragenden Bauteilen aufweisen, daß bei ihrer Beaufschlagung mit Überdruck am Aussenumfang die Weite des Spaltes (10) aufrechterhalten oder vergrößert wird.

6. Dichtungsanordnung nach einem der Ansprüche 1 bis 5, dadurch gekennzeichnet, daß der nicht drehende Gleitring (5) in Axialrichtung verschieblich gelagert und durch eine Federanordnung (8) in Richtung auf den mit der Welle (1) umlaufenden Gleitring (2) vorgespannt ist.

7. Dichtungsanordnung nach Anspruch 6 dadurch gekennzeichnet, daß die Sekundärdichtung (7) des nicht drehenden Gleitrings (5) auf einem Durchmesser angeordnet ist, der wesentlich kleiner als der Durchmesser des äußeren Umfangs dieses Gleitrings ist.

8. Dichtungsanordnung nach Anspruch 6 oder 7, dadurch gekennzeichnet, daß die Sekundärdichtung (7) des nicht drehenden Gleitrings (5) axial zurückversetzt von dessen Gleitfläche (5a) angeordnet ist.

9. Dichtungsanordnung nach einem der Ansprüche 1–5 dadurch gekennzeichnet, daß der mit der Welle (1) umlaufende Gleitring (2) benachbart zu seinem Innenumfang an der Welle abgestützt ist.

## Claims

1. A seal arrangement for a shaft (1) having a main seal which, while the shaft is stationary and while the shaft rotates in smooth operation, prevents a hazardous fluid from escaping from a housing, and having an auxiliary seal which is connected downstream from the said main seal via a space (6a) surrounded by a part (6) of the housing and takes over the sealing function on failure of the said main seal, and is formed by a mechanical seal turning without contact with the shaft rotation in smooth operation, characterized in that the auxiliary seal is formed by a gas-lubricated mechanical seal (2, 5) which, in relation to the pressure in the space (6a), has a K-factor far higher than 1, which is connected to the space (6a) at its outside circumference and which is connected to the free atmosphere (A) at its inside circumference and has open intake grooves (2b) to this inside circumference, the intake grooves (2b) in smooth operation introducing air from the free atmosphere between the sliding surfaces (2a, 5a) and the latter forming separating air cushions of minimum thickness, and in faulty operation the mechanical seal (2, 5), lubricated by the fluid which has entered the space (6a) or in dry rotation, taking over the sealing function.

2. A seal arrangement according to claim 1, characterized in that the main seal is formed by the slit can (slit tube, membrane) of a pump with magnetic drive which seals of a first part of the housing, accommodating the pump wheel and a first magnet arrangement connected to the latter and containing the hazardous fluid to be sealed off, from the second part (6) of the housing connecting this main seal to the auxiliary seal (2, 5), which second part (6) contains a second magnet arrangement coupled magnetically to the first magnet arrangement through the slit can and connected to the drive shaft of the pump, and in that the auxiliary seal (2, 5) seals off the exit of the drive shaft (1) of the pump from the second part (6) of the housing to the free atmosphere (A) and is connected upstream from the bearing arrangement of the drive shaft (1).

3. A seal arrangement according to claim 1 or 2, characterized in that the sealing surface (2a, 5a), of the slide rings (2, 5) of the auxiliary seal form a slit (10), the width of which, setting out from the value zero adjacent to the outside circumference of the sealing surfaces, increases with increasing approach to the inside circumference.

4. A seal arrangement according to claim 3, characterized in that the slit (10) has a largest width of 10 µm.

5. A seal arrangement according to claim 3 or 4, characterized in that the slide rings (2, 5) of the auxiliary seal have such a shape and/or position of their secondary seal and/or location and type of their bearing on the parts supporting them that the width of the slit (10) is maintained or enlarged when they are charged with overpressure at the outside circumference.

6. A seal arrangement according to any of claims 1 to 5, characterized in that the non-rotating slide ring (5) is mounted displaceably in the axial direction and is prestressed by means of a spring arrangement (S) in the direction towards the slide ring (2) rotating with the shaft (1).

7. A seal arrangement according to claim 6, characterized in that the secondary seal (7) of the non-rotating slide ring (5) is arranged on a diameter which is far smaller than the diameter of the outer circumference of this slide ring.

8. A seal arrangement according to claim 6 or 7, characterized in that the secondary seal (7) of the nonrotating slide ring (5) is arranged axially set back from its sliding surface (5a).

9. A seal arrangement according to any of claims 1 to 5, characterized in that the slide ring (2) rotating with the shaft (1) is supported on the shaft adjacent to the inside circumference of the slide ring.

## Revendications

1. Joint pour un arbre (1) comportant un joint principal empêchant un fluide dangereux de sortir d'un carter lorsque l'arbre est immobile et lorsqu'il tourne et un joint auxiliaire assurant la fonction d'étanchéité du joint principal en cas de défaillance monté en aval du joint principal par l'intermédiaire d'un espace (6a) entouré d'une partie de carter (6), joint auxiliaire qui est constitué d'un joint à bague lisse tournant avec l'arbre en fonctionnement normal sans contact avec celui-ci, caractérisé par le fait que ledit joint auxiliaire est formé par un joint (2, 5) à bague lisse lubrifié au gaz qui présente, par rapport à la pression régnant dans l'espace (6a), un facteur K sensiblement supérieur à 1, ladite bague lisse étant sur son pourtour extérieur en communication avec l'espace (6a) et sur son pourtour intérieur en communication avec l'atmosphère libre (A) et présente des gorges (2b) ouvertes en direction de ce pourtour intérieur, en fonctionnement normal, lesdites gorges (2b) introduisant de l'air venant de l'atmosphère libre entre les surfaces lisses (2a, 5a) et ces dernières formant des coussins d'air de séparation d'une épaisseur minimale et en cas de défaillance le joint à bague lisse (2, 5) assurant la fonction d'étanchéité en étant lui-même lubrifié par le liquide qui a pénétré dans l'espace (6a) ou en fonctionnant à sec.

2. Joint selon la revendication 1, caractérisé par le fait que le joint principal est réalisé par le diaphragme (tube fendu, membrane) d'une pompe à entrainement magnétique et assure l'étanchéité d'une première partie de carter contenant le fluide dangereux à étancher et logeant la roue de pompe et un premier montage magnétique relié à celle-ci à l'égard d'une deuxième partie de carter (6) reliant ce joint principal au joint auxiliaire (2, 5), la deuxième partie de carter (6) contenant un deuxième montage magnétique relié à l'arbre d'entraînement de la pompe et accouplé magnétiquement au premier montage magnétique à travers le diaphragme, et par le fait que le joint auxiliaire (2, 5) assure l'étanchéité de la sortie de l'arbre d'entraînement (1) de la pompe de la deuxième partie du carter (6) vers l'atmosphère libre (A) et qu'il est monté en amont du palier de l'arbre d'entraînement (1).

3. Joint selon la revendication 1 ou 2, caractérisé par le fait que les faces de jointage (2a, 5a) des bagues lisses (2, 5) du joint auxiliaire forment une fente (10) dont la largeur augmente à partir d'une valeur proche de zéro au pourtour des faces de jointage au fur et à mesure qu'elle s'approche du pourtour intérieur.

4. Joint selon la revendication 3, caractérisé par le fait que la fente (10) présente une largeur maximale de 10 μm.

5. Joint selon la revendication 3 ou 4, caractérisé par le fait que les bagues lisses (2, 5) du joint auxiliaire sont conformées et/ou situées et/ou s'appuient sur les composants qui les supportent en un endroit et d'une manière telle que, en cas de surpression imposée au pourtour extérieur de la fente (10), la largeur de celle-ci est conservée ou agrandie.

6. Joint selon l'une quelconque des revendications 1 à 5, caractérisé par le fait que la bague lisse (5) qui ne tourne pas est montée de manière mobile en direction axiale et soumise à une tension initiale par l'effet d'un ressort (8) en direction de la bague lisse (2) qui tourne avec l'arbre (1).

7. Joint selon la revendication 6, caractérisé par le fait que le joint secondaire (7) de la bague lisse qui ne tourne pas est ajusté à un diamètre qui est sensiblement inférieur à celui du pourtour extérieur de cette baque lisse.

8. Joint selon la revendication 6 ou 7, caractérisé par le fait que le joint secondaire (7) de la bague (5) qui ne tourne pas est décalé axialement vers l'arrière par rapport à la face lisse (5a) de cette bague.

9. Joint selon l'une des revendications 1 à 5, caractérisé par le fait qu'au voisinage de son pourtour intérieur la bague lisse (2) qui tourne avec l'arbre (1) s'appuie sur celui-ci.

FIG. 1

FIG. 2

FIG. 3

FIG. 4